# EUROPÄISCHE PATENTSCHRIFT

(11) **EP 1 346 868 B1**
(45) Veröffentlichungstag und Bekanntmachung des Hinweises auf die Patenterteilung: **21.06.2006**
(21) Anmeldenummer: 03004119.8
(22) Anmeldetag: 26.02.2003
(51) Int. Cl.: B60K 26/02

(54) **Intelligentes Fahrpedal**
Intelligent accelerator pedal
Pédale d'accélérateur intelligent

(30) Priorität: 13.03.2002 DE 10211018
(43) Veröffentlichungstag der Anmeldung: 24.09.2003
(73) Patentinhaber: AB Elektronik GmbH, 59368 Werne (DE)
(72) Erfinder: Apel, Peter, 59394 Südkirchen (DE); Wilczek, Klaus, 59368 Werne (DE)
(74) Vertreter: Hoffmeister, Helmut

(56) Entgegenhaltungen:
- WO-A-03/039899
- DE-A- 19 506 629
- DE-A- 19 620 929
- DE-U- 29 805 253
- PATENT ABSTRACTS OF JAPAN vol. 017, no. 686 (M-1529), 15. Dezember 1993 (1993-12-15) & JP 05 231194 A (NIPPONDENSO CO LTD), 7. September 1993 (1993-09-07)

## Beschreibung

Die Erfindung betrifft eine Fahrpedalvorrichtung, die wenigstens aufweist,
ein Pedalelement, das in einem Gaspedaldrehpunkt gegenüber über einem Basiselement zu bewegen ist,
wenigstens ein Rückholelement, das eine Gegenkraft erzeugt,
einen Elektromotor, der mit dem Pedalelement verbunden ist und mit dem gesteuert eine sprunghaft ansteigende Motorgegenkraft erzeugbar ist, die der Gegenkraft hinzuaddiert auf das Pedalelement wirkt.

Eine Vorrichtung der genannten Art und nach dem Oberbegriff des Anspruchs 1 ist aus der Schrift Patent Abstracts of Japan, Publication Number 05231194, bekannt. Bei der dort beschriebenen Vorrichtung wird ein Schrittmotor verwendet, der auf das Fahrpedal wirkt und der insbesondere dann angesteuert wird, wenn der Reibungskoeffizient zwischen Fahrwerk und Straßenoberfläche unter einen bestimmten Wert sinkt.

Nachteilig bei der bekannten Vorrichtung ist, dass der Schrittmotor durch zusätzliche Maßnahmen mit dem Fahrpedal zu verbinden ist, wobei sich ein größerer Montageaufwand ergibt. Gewünscht wird normalerweise bei der Fahrzeugmontage, dass einfach einzubauende Einheiten von den Zulieferern angeliefert werden, die sowohl in einfacher Weise angeschlossen als auch justiert werden können.

Es stellt sich deshalb die Aufgabe, eine Vorrichtung der eingangs genannten Art weniger aufwendig und effektvoller aufzubauen.

Diese Aufgabe wird durch eine Fahrpedalvorrichtung der genannten Art dadurch gelöst, dass der Elektromotor ein Torquemotor ist, der im Gaspedaldrehpunkt angeordnet ist, wobei dessen Rotoreinheit mit dem Pedalelement verbunden und dessen Statoreinheit in dem Basiselement angeordnet ist.

Durch den Torquemotor wird der Fußbetätigungskraft des Fahrzeugführers ruckartig eine Gegenkraft entgegengesetzt, wenn die Steuereinheit anspricht. Hierdurch wird der Fahrzeugführer auf eine Gefahrensituation aufmerksam gemacht und kann entsprechend reagieren. Wird die Motoreinheit wieder ausgeschaltet, ist die Gegenkraft ebenso ruckartig nicht mehr vorhanden. Hierdurch wird der Fahrzeugführer darauf aufmerksam gemacht, dass die Gefahrensituation bereinigt ist.

Der genannte Torquemotor ist als Motor ohne Zwischengetriebe einsetzbar. Durch das Einbauen des Torquemotors zum einen im Gaspedaldrehpunkt und zum anderen direkt in die Basiseinheit wird der Gesamtaufbau des Fahrpedals vereinfacht.

Das Steuersensorelement kann als Sensor für verschiedene Gefahren ausgebildet sein. So kann das Steuersensorelement ein Geschwindigkeitssensor, ein Abstandsensor, ein Temperatursensor oder dergleichen sein.

Die Steuereinheit kann eine Mikrorechnereinheit mit einem E²PROM-Speicher zur Eingabe des Normalzustandes sein. Der E²PROM stellt einen Festwertspeicher dar, der hinsichtlich der Überschreibbarkeit die Eigenschaften eines ROM hat. Hierdurch ist es möglich, die unterschiedlichen Normalzustände einzugeben. Hinsichtlich des Herauslesens des eingeschriebenen Wertes für den Normalzustand verhält sich der E²PROM wie ein Festwertspeicher, hingegen des Einschreibens der unterschiedlichen Normalzustände wie ein RAM.

Ein Ausführungsbeispiel der Erfindung ist in der Zeichnung dargestellt und wird im Folgenden näher beschrieben.

Es zeigen:
- Fig. 1: ein Fahrpedal mit eingebautem Torquemotor in einer schematisch dargestellten Seitenansicht,
- Fig. 2: ein Fahrpedal gemäß Fig. 1 in einer schematisch dargestellten Seitenansicht,
- Fig. 3: ein Fahrpedal mit Torquemotor gemäß Fig. 2 in einer auseinandergezogenen schematischen Darstellung,
- Fig. 4a: einen Torquemotor gemäß den Fig. 1 bis 3 in einer schematisch perspektivischen Darstellung,
- Fig. 4b: einen Torquemotor gemäß Fig. 4a mit einem abgenommenen Gehäuseelement in einer schematischen, perspektivischen Darstellung,
- Fig. 4c: einen Torquemotor gemäß Fig. 4b in einer schematischen, auseinandergezogenen, perspektivischen Darstellung und
- Fig. 5: einen Verlauf der aufzuwendenden Pedalkraft F eines betätigten Fahrpedals mit Torquemotor in Abhängigkeit vom Drehwinkel W.

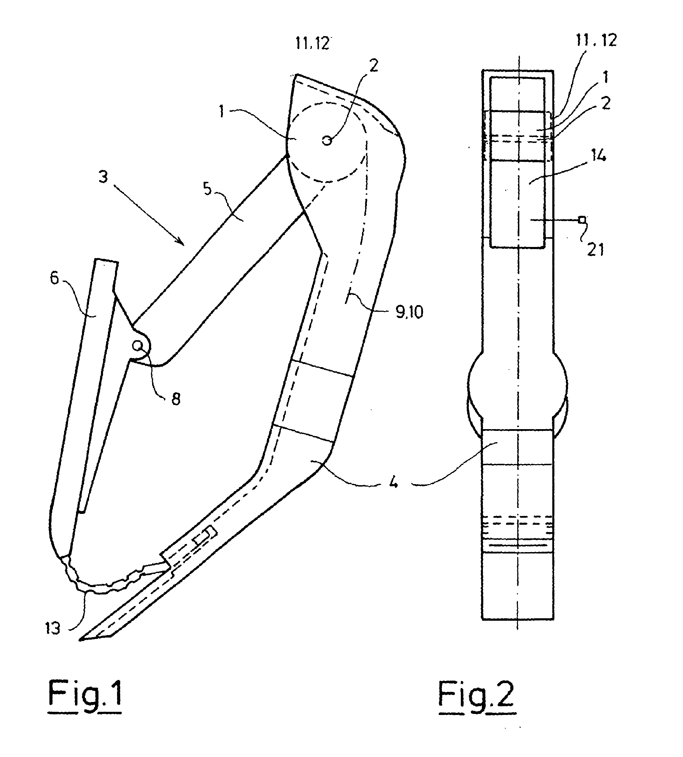

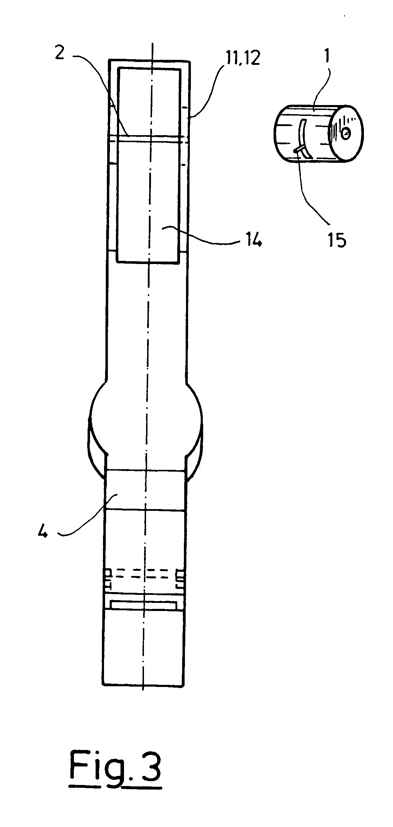

In den Fig. 1 bis 3 ist ein " intelligentes Fahrpedalmodul" dargestellt.

Das Fahrpedal umfasst eine Bodenplatte 4, in deren Gaspedaldrehpunkt 2 ein Pedalhebelelement 5 beweglich angeordnet ist. Mit dem Pedalhebelelement 5 ist über einen Fahrpedaldrehpunkt 8 ein Fahrpedal 6 drehbeweglich verbunden. Das Ende des Fahrpedals 6 ist über ein Gliederkoppelelement 13 mit der Bodenplatte 4 verbunden. Hierdurch wird gesichert, dass das Fahrpedal 6 immer lagegerecht gegenüber dem Fuß des Fahrzeugführers positioniert wird. Mit Hilfe zweier Rückholelemente 11, 12, wird das Pedalhebelelement 5 und damit das Fahrpedalelement 6 immer in die Ausgangsstellung zurückgestellt.

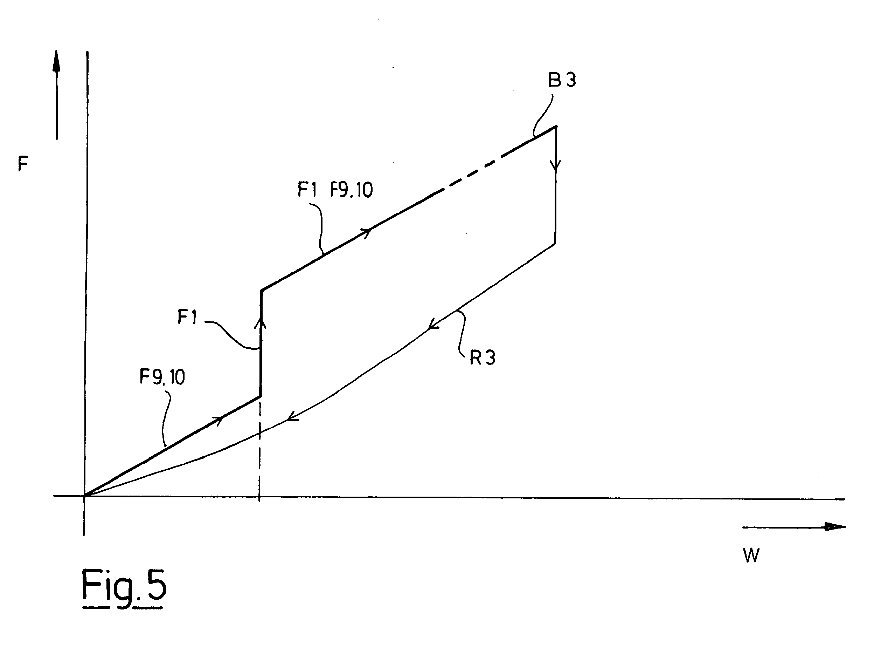

Zwei Dämpferelemente 9, 10 sorgen dafür, dass die Betätigung und Bewegung des Pedalhebelelements 5 mit Hilfe des Fahrpedals 6 gedämpft wird. Die beiden Dämpferelemente 9 und 10 erzeugen eine Dämpfungskraft F9, 10, die der Betätigungsbewegung des Fahrzeugführers, wie anhand der Fig. 5 erläutert werden wird, entgegenwirkt. Die beiden Dämpferelemente 9, 10 können beispielsweise als Bremsseile ausgeführt werden, die über raue Oberflächen geführt werden, die unterschiedliche Rauigkeiten haben können.

Es ist weiterhin ein Torquemotor 1 vorgesehen, der im Bereich des Gaspedaldrehpunkts 2 angeordnet ist. An dieser Stelle kann er am besten seine Wirkung entfalten. Der Torquemotor 1 hat den Vorteil, dass er ohne ein Übersetzungsgetriebe eingesetzt werden kann. Der Torquemotor 1 ist im Inneren der Bodenplatte 4 geschützt angeordnet. Hierdurch wird eine Beschädigung des Torquemotors beim Betätigen des Fahrpedals 6 durch den Fuß des Fahrers vermieden.

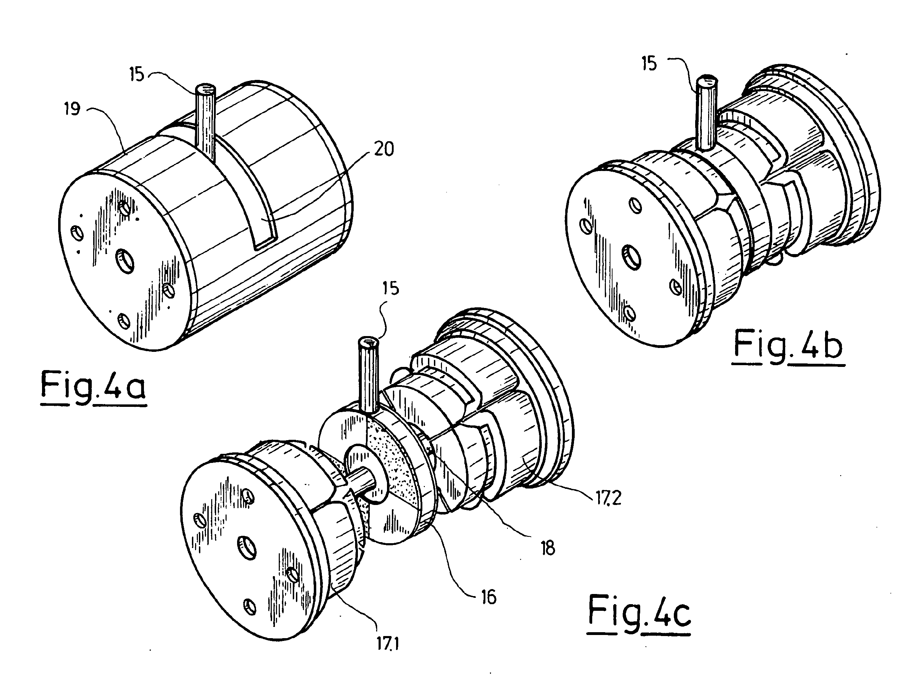

Der Torquemotor 1 ist in den Fig. 4a bis 4c gezeigt. Der Drehzahlbereich des Torquemotors 1 liegt zwischen 1 min⁻¹ und ca. 1.200 min⁻¹ und eignet sich bei hohen Drehmomenten für einen Direktanschluss ohne Zwischengetriebe. Er weist als Rotoreinheit einen ringförmigen, genuteten Torquemotorrotor 16 mit großem Durchmesser auf. An dem Rotor 16 ist ein Pedalzapfen 15 angeordnet. Über diesen Zapfen ist der Rotor mit dem Pedalhebelelement 5 verbunden.

Zur linken und rechten Seite des Rotors 16 ist jeweils eine Statorhälfte 17.1, 17.2 angeordnet. Mit Hilfe einer Motorachse 18 bewegt sich der Rotor 16 zwischen den beiden Statorhälften. Figur 4c zeigt den Torquemotor in auseinandergezogener Darstellung und Fig. 4b in zusammengeschobenen Zustand.

Fig. 4a zeigt, dass über die beiden Statorhälften, ein Gehäuse 19 geschoben ist. In das Gehäuse 19 ist eine Schlitzausnehmung 20 eingebracht, in der sich der Pedalzapfen 15 von Anschlag zu Anschlag bewegen kann.

Der Torquemotor 1 ist mit einer Mikrorechnereinheit 14 mit einem E²PROM verbunden. An der Mikrorechnereinheit 14 ist darüber hinaus ein Steuersensorelement 21 angeordnet, das als Geschwindigkeitssensor, Abstandssensor, Temperatursensor oder dergleichen ausgebildet sein kann.

Die Arbeitsweise des Fahrpedalmoduls, wie sie sich aus dem dargestellten Ausführungsbeispiel ergibt, sei erläutert.

Durch Niederdrücken des Fahrpedals 6 wird das Pedalhebelelement 5 betätigt. Die Rückholelemente 11, 12 und die beiden Dämpferelemente 9, 10 setzen dieser Bewegung eine Kraft F9, F10 entgegen, wie in Fig. 5 gezeigt ist. Das heißt, je stärker und intensiver das Fahrpedal 6 und damit das Pedalhebelelement 5 betätigt wird, umso größer ist die Summe aus Rückstell- und Dämpfungskraft F9,10.

Bevor der Fahrzeugführer die Autobahn befährt, hat er beispielsweise die vorgeschriebene Richtgeschwindigkeit von 130 km/h in den E²PROM als Sollwert eingegeben. Die mit ihm fahrenden Fahrzeuge verleiten ihn dazu, die vorgeschriebene Höchstgeschwindigkeit von 130 km/h zu überschreiten. Das Steuersensorelement 21 erfasst diese Überschreitung und gibt sie an die Mikrorechnereinheit 14 weiter. Die Mikrorechnereinheit 14 vergleicht den Ist- mit dem Sollwert und veranlasst die sofortige Einschaltung des Torquemotors 1. Der Torquemotor 1 entwickelt eine Torquemotorkraft F1, die, wie Fig. 5 zeigt, schlagartig ansteigend wirkt.

Durch das schlagartige Ansteigen der Gegenkraft, die jetzt aus der Torquemotorkraft F1 plus Rückstell- und Dämpfungskraft F9, 10 besteht, wird der Fahrzeugführer deutlich auf die Überschreitung der Sollgeschwindigkeit aufmerksam gemacht. Läßt er dennoch nicht von der weiteren Betätigung des Fahrpedalelements und damit des Pedalhebelelements 5 ab, muss er die Summe aller Kräfte überwinden.

Das führt im Allgemeinen dazu, dass er nach kurzer Zeit den Fuß vom Fahrpedalelement 6 lockert, so dass das Fahrpedal zurückschwingt. Damit verringert sich zwangsläufig die Geschwindigkeit. Das Steuersensorelement 21 erfasst diese Änderung. Sobald der Sollzustand wieder erreicht ist, wird der Torquemotor abgeschaltet und nur die beiden Dämpferelemente 9, 10 und die Rückstellkraft wirken der Betätigungskraft entgegen.

Wird der Fuß vollständig vom Fahrpedalelement 6 genommen und damit das Pedalhebelelement durch die beiden Rückholelemente, die als Federn ausgestaltet sind, zurückgestellt, wirkt die Dämpfungskraft F9, F10 der beiden Dämpferelemente dieser Rückholbewegung nur teilweise entgegen, so dass sich ein Kurvenverlauf ergibt, der durch die Pedalrückbewegung R3 in Fig. 5 dargestellt ist.

### Bezugszeichenliste

- 1: Torquemotor
- 2: Gaspedaldrehpunkt
- 3: Pedalelement
- 4: Bodenplatte
- 5: Pedalhebelelement
- 6: Fahrpedalelement
- 8: Fahrpedaldrehpunkt
- 9, 10: Dämpferelement
- 11, 12: Rückholelement
- 13: Gliederkoppelelement
- 14: Mikrorechnereinheit
- 15: Pedalzapfen
- 16: Torquemotorrotor
- 17.1, 17.2: Statorhälfte
- 18: Motorachse
- 19: Gehäuseelement
- 20: Schlitzausnehmung
- 21: Steuersensorelement

- F 9,10: Dämpfungskraft
- F1: Torquemotorkraft
- B3: Pedalbetätigungsbeweung
- R3: Pedalrückbeweung

## Patentansprüche

1. Fahrpedalvorrichtung, die wenigstens aufweist,
- ein Pedalelement (3), das in einem Gaspedaldrehpunkt (2) gegenüber über einem Basiselement (4) zu bewegen ist,
- wenigstens ein Rückholelement (11, 12), das eine Gegenkraft erzeugt,
- einen Elektromotor (1), der mit dem Pedalelement (3) verbunden ist und mit dem gesteuert eine sprunghaft ansteigende Motorgegenkraft (F1) erzeugbar ist, die der Gegenkraft hinzuaddiert auf das Pedalelement (3) wirkt,
- eine Steuereinheit (14), die mit einem Sensorelement (21) verbunden ist und mit der der Elektromotor (1) wie folgt steuerbar ist:
a) Erfassen eines Zustandes durch das Steuersensorelement (21), der von einem vorgegebenen Normalzustand abweicht,
b) Einschalten des Elektromotors (1), der auf das Pedalelement (3) wirkt,
**dadurch gekennzeichnet, dass** der Elektromotor (1) ein Torquemotor (1) ist, der im Gaspedaldrehpunkt (2) angeordnet ist, wobei dessen Rotoreinheit (16) mit dem Pedalelement (3) verbunden und dessen Statoreinheit (17.1, 17.2) in dem Basiselement (4) angeordnet ist.

2. Vorrichtung nach Anspruch 1, **dadurch gekennzeichnet, dass** das Steuersensorelement (21) ein Geschwindigkeitssensor ist, über den bei Überschreiten einer Sollgeschwindigkeit die Motoreinheit einschaltbar ist.

3. Vorrichtung nach Anspruch 1, **dadurch gekennzeichnet, dass** die Steuereinheit eine Mikrorechnereinheit (14) mit einem E²PROM-Speicher zur Eingabe des Normalzustandes ist.

## Claims

1. Accelerator pedal device, comprising at least:
- a pedal element (3) which is to be moved in an accelerator pedal centre of motion (2) in relation to a base element (4),
- at least one return element (11, 12) which produces a counter force,
- an electric motor (1) which is connected to a pedal element (3) and with which a motor counter force (F1) can be produced increasing in steps in a controlled way which, added to the counter force, acts on the pedal element (3),
- a control unit (14) which is connected to a sensor element (21) and with which the electric motor (1) can be controlled as follows:
a) detection of a state by the control sensor element (21) which deviates from a predefined normal state,
b) switching on of the electric motor (1) which acts on the pedal element (3),
**characterised in that** the electric motor (1) is a torque motor (1) which is arranged in the accelerator pedal centre of motion (2), wherein its rotor unit (16) is connected to the pedal element (3) and its stator unit (71.1, 17.2) is arranged in the base element (4).

2. Device according to claim 1, **characterised in that** the control sensor element (21) is a speed sensor, by means of which the motor unit can be switched on if a target speed is exceeded.

3. Device according to claim 1, **characterised in that** the control unit is a microcomputer unit (14) with an E²PROM memory for inputting the normal state.

## Revendications

1. Dispositif de pédale d'accélérateur comprenant au moins
- un élément de pédale (3) mobile autour d'un point de rotation (2) par rapport à un élément de base (4),
- un élément de rappel (11, 12) produisant une force contraire,
- un moteur électrique (1) connecté à l'élément de pédale (3) et avec lequel il est possible de produire une force motrice contraire (F1) à accroissement rapide qui, ajoutée à la force contraire de l'élément de rappel (11, 12), agit sur l'élément de pédale (3),
- une unité de commande (14) connectée à un capteur (21) et par le biais de laquelle le moteur électrique (1) est réglable comme suit :
a) enregistrement par le capteur-commande (21) d'un état différent de l'état normal prédéfini,
b) enclenchement du moteur électrique (1) qui agit sur l'élément de pédale (3),
**caractérisé en ce que** le moteur électrique (1) est un moteur-couple (1) -disposé au niveau du point de rotation (2) de la pédale d'accélération- dont le rotor (16) est connecté à l'élément de pédale (3) et dont le stator (17.1, 17.2) est agencé à l'intérieur de l'élément de base (4).

2. Dispositif selon la revendication 1, **caractérisé en ce que** le capteur-commande (21) est un capteur de vitesse qui peut enclencher le moteur électrique en cas de dépassement d'une vitesse théorique.

3. Dispositif selon la revendication 1, **caractérisé en ce que** l'unité de commande est un microcalculateur (14) équipé d'une mémoire E2PROM pour la saisie de l'état normal.
